# Europäisches Patentamt

(19) **European Patent Office**

**Office européen des brevets**

(11) Veröffentlichungsnummer: **0 144 902**

**B1**

(12) # EUROPÄISCHE PATENTSCHRIFT

(45) Veröffentlichungstag der Patentschrift:
12.10.88

(21) Anmeldenummer: 84114359.7

(22) Anmeldetag: 26.11.84

(51) Int. Cl.⁴: **C 08 J 7/04,** C 09 D 7/12,
C 09 D 3/72

(54) Gleitfähiges Elastomerteil.

(30) Priorität: 03.12.83 DE 3343836

(43) Veröffentlichungstag der Anmeldung:
19.06.85 Patentblatt 85/25

(45) Bekanntmachung des Hinweises auf die Patenterteilung:
12.10.88 Patentblatt 88/41

(84) Benannte Vertragsstaaten:
AT BE CH DE FR GB IT LI LU NL SE

(56) Entgegenhaltungen:
EP-A-0 083 552
AU-B-82 630
FR-A-1 250 711
US-A-4 143 109

**Die Akte enthält technische Angaben, die nach
dem Eingang der Anmeldung eingereicht wurden
und die nicht in dieser Patentschrift enthalten sind.**

(73) Patentinhaber: **Henkel Kommanditgesellschaft auf
Aktien, Postfach 1100 Henkelstrasse 67, D-4000
Düsseldorf- Holthausen (DE)**

(72) Erfinder: **Özelli, Riza Nur, Dr., Stephanusstrasse
37, D-4040 Neuss (DE)**
Erfinder: **Lippert, Hartmut, Geschwister- Scholl-
Strasse 61, D-4019 Monheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein Elastomerteil, das aufgrund einer speziellen Beschichtung einen recht geringen Reibungskoeffizienten gegenüber Glas aufweist.

Für eine Reihe von technischen Anwendungen, beispielsweise für die Abdichtung von Fensterschächten in Automobilen, werden Elastomere gebraucht, die neben ihren sonstigen bekannten günstigen Eigenschaften verbesserte Gleitfähigkeit gegenüber Glas aufweisen. Um dies zu erreichen, war es bisher üblich, die Elastomerteile mit einem Klebstoff zu bestreichen und in einem elektrischen Feld mit Faserkurzschnitten zu beflocken. Nach diesem Verfahren werden Elastomerteile mit textilartiger Oberfläche erhalten, die die geforderten Gleiteigenschaften aufweisen. Es wird jedoch als Nachteil empfunden, daß das Beflockungsverfahren sehr aufwendig und damit teuer ist. Um zu einer billigeren Problemlösung zu kommen, wurde in Fachkreisen diskutiert, Elastomerteile mit Lacken zu beschichten, die fest gebunden Abstandshalter aus harten Materialien enthalten. Dabei wurden als Abstandshalter Teilchen aus Glas, Aluminium oder Polypropylen vorgeschlagen. Wenngleich mit Lacken, die derartige Abstandshalter enthalten, sehr einfach gleitfähige Elastomerteile herstellbar sind, so weisen die verwendeten Abstandshalter doch einige gravierende Nachteile auf. So haben beispielsweise Glaskugeln aufgrund ihrer hohen Härte abrasive Wirkung gegenüber weicheren Materialien und auch gegenüber anderen Gläsern. Dies führt zur Schädigung der Oberfläche, was z. B. bei Automobilfenstern nicht erwünscht ist. Darüber hinaus sind glasgefüllte Gleitlacke nicht oder nur schwer mit Spritzpistolen zu verarbeiten, da sich die Glasteilchen in den Spritzdüsen ansammeln können. Die Verwendung von Aluminiumteilchen als Abstandshalter bringt den Nachteil mit sich, daß sie das Elastomerprofil metallglänzend einfärbt, was oftmals nicht gewünscht wird. Polypropylen schließlich ist zwar im Prinzip geeignet, wird jedoch von den meisten Lacken so schlecht benetzt, daß entweder die lacktechnischen Eigenschaften, also beispielsweise die Stabilität der Mischungen nicht gewährleistet sind oder aber die Abstandshalter bei stärkerer Beanspruchungaus dem Lackfilm ausgerissen werden.

Aus der australischen Patentanmeldung AU-B-82 630 sind lackierte Elastomerteile mit verringerten Reibungskoeffizienten bekannt, bei denen die Lackschicht über die Lackoberfläche hinausragende Abstandshalter aus Nylonteilchen von 5 bis 500 µm Durchmesser oder anderen Materialien wie beispielweise Tetrafluorethylenpolymeren enthält. Da dort verlangt wird, daß die Härte der abstandshaltenden Teilchen größer sein soll als die Härte des Elastomermaterials, das Gummi oder PVC sein kann, führt die Lehre dieser Anmeldung von den besonders günstigen Eigenschaften von PVC-Kugeln weg. Darüberhinaus gibt die genannte australische Patentanmeldung auch keinen Aufschluß, wie Lackschichtdicke und Kugeldurchmesser aufeinander abgestimmt werden sollen, um günstige Verarbeitungs-, Lack- und Gleiteigenschaften zu erreichen.

Aus der französischen Patentanmeldung FR-A 1 250 711 sind Kunststoffolien mit einer Beschichtung aus einem zweiten Kunststoff, der PVC-Teilchen mit einem mittleren Durchmesser von 1 bis 5 µm enthält, bekannt. Die Verwendung von PVC-Teilchen als Abstandshalter in Gleitlacken wird nicht nahegelegt.

Es ist somit Aufgabe der Erfindung, ein Elastomerteil zu schaffen, das in seinen Gleiteigenschaften beflockten Elastomeren entspricht, nach einem einfachen Lackierverfahren beschichtet wird, keine abrasive Wirkung gegenüber Glas zeigt, einfärbbar und dauerhaft ist.

Diese Aufgabe wurde gelöst durch ein lackiertes Elastomerteil mit vermindertem Reibungskoeffizienten, das mit einer Lackschicht überzogen ist, welche fest verankerte, über die Lackoberfläche hinausragende Abstandshalter enthält, dadurch gekennzeichnet, daß es sich bei den Abstandshaltern um kugelige PVC-Teilchen mit einem mittleren Durchmesser zwischen 70 und 200 µm handelt und, daß es sich bei dem Lack um einen Polyurethanlack mit einer Dicke zwischen 7 und 40 µm handelt, wobei die Lackschichtdicke 5 - 50 % des Kugeldurchmessers beträgt.

Es ist bis jetzt nicht untersucht worden, worauf die Verminderung des Reibungskoeffizienten von Elastomeren durch Lackieren mit Lacken, die kugelige Teilchen enthalten, beruht. Ohne die Erfindung auf eine Theorie einzugrenzen, wird jedoch vermutet, daß die kugeligen, harten Teilchen, die vorbeigleitende Glasscheibe von der lackierten Elastomeroberfläche wegrücken und daß somit die Verminderung der Reibung durch eine Verringerung der Auflagenfläche zustande kommt. Daraus rechtfertigt sich die Bezeichnung Abstandshalter für derartige Teilchen.

Die erfindungsgemäßen Abstandshalter sind kugelige PVC-Teilchen. Hierbei bedeutet kugelig, daß die Teilchen zumindest größtenteils eine runde, kugelförmige oder elipsoide Oberfläche aufweisen, d.h. zumindest größtenteils frei von Spitzen und Kanten sind. Derartige PVC-Teilchen sind technisch leicht zugänglich, sie werden nach dem Verfahren der Suspensionspolymerisation hergestellt. Auf dem Gebiet der Suspensionspolymerisation, insbesondere von Vinylchlorid, existiert ein umfangreiches Fachwissen, das es erlaubt, Teilchen mit in weiten Grenzen variierbaren Größen und Größenverteilungen herzustellen. Für die Zwecke der vorliegenden Erfindung werden Teilchen mit einem mittleren Durchmesser zwischen 70 und 200 µm vervendet. Bevorzugt sind Teilchen mit einem Durchmesser von 100 - 150 µm. Die Verwendung kleinerer Teilchen führt zu einem Nachlassen der Gleiteigenschaften, wo hingegen bei Verwendung von Teilchen in einem Durchmesser von mehr als 200 µm die vorteilhaften Eigenschaften der lackierten Elastomerteile gewährleistet sind, jedoch die Verarbeitung der Lacke durch Spritzpistolen sehr schwierig wird.

Wenngleich kugelige PVC-Teilchen mit einer breiten Teilchengrößenverteilung, also Gemische zwischen Teilchen unterschiedlichen Durchmessers, als Abstandshalter im Sinne der Erfindung eingesetzt werden können, so ist es doch bevorzugt, Teilchen mit enger Teilchengrößenverteilung, also in etwa gleichgroße Teilchen zu verwenden. Großtechnisch nach dem Suspensionspolymerisationsverfahren hergestelltes PVC weist meist die geforderte enge Teilchengrößenverteilung auf und kann daher eingesetzt werden, wenn der mittlere Teilchendurchmesser im beanspruchten Bereich liegt.

Der Begriff PVC wird hier für Polyvinylchlorid gebraucht und umfaßt auch Copolymere des Vinylchlorids soweit sie überwiegend aus Vinylchlorid bestehen oder allgemein als PVC bezeichnet werden. Im Sinne der Erfindung besonders geeignete PVC-Typen sind beispielsweise das Produkt Vinoflex® S6115 der Firma Wacker-Chemie sowie das Produkt GEON® 221 der firma BF Goodrich.

Diese Produkte zeigen die geforderte mittlere Teilchengröße nach einem vereinfachten, in der Lackindustrie üblichen Meßverfahren, bei dem ein mit Pigmentkörnern gefüllter Lackfilm in einer genormten Vorrichtung von einer Schichtdicke von etwa 300 μm bis auf 0 ausgezogen wird und festgestellt wird, bei welcher Schichtdicke die Pigmentkörner die Lackoberfläche durchstoßen.

Die kugeligen PVC-Teilchen werden in einer Menge von etwa 10 Gew.-%, bezogen auf den lösungsmittelfreien Lack, auf die Elastomerteile aufgebracht. Um den Charakter des Lackes als solches nicht zu verändern, wird der Fachmann nicht mehr als 25 und insbesondere nicht mehr als 35 oder gar 50 Gew.-% PVC, bezogen auf Lack einsetzen. Bei weniger als 5 Gew.-% PVC, bezogen auf Lack, beginnen die Gleiteigenschaften allmählich nachzulassen. Ein bevorzugter Bereich ist daher zwischen 5 und 20 Gew.-%, insbesondere zwischen 7 und 15 Gew-% PVC, bezogen auf Lack, anzusetzen.

Um günstige Gleiteigenschaften zu erreichen, müssen Kugeldicke und die Dicke der Lackschicht aufeinander abgestimmt werden. Zwar wird eine Verminderung des Reibungskoeffizienten beobachtet, wenn die Dicke der Lackschicht in dem weiten Bereich zwischen 5 und 50 % der Kugeldicke variiert wird, doch ist es bevorzugt, die Lackschichtdicke auf 10 bis 20 % der Kugeldicke einzustellen. Bevorzugte Lackschichtdicken liegen damit zwischen 7 und 40 μm, insbesondere zwischen 10 und 25 μm. Die Einstellung der Lackschichtdicke kann der Fachmann nach den üblichen Methoden durchführen. So können Spritzdauer, Spritzmenge oder auch der Feststoffgehalt des Lackes variiert werden.

Als Lackbindemittel zur Aufbringung der Abstandshalter auf die Elastomerprofile nach der Lehre der Erfindung können die üblicherweise zum Lackieren von Elastomeren verwendeten Produkte eingesetzt werden. Bevorzugt ist in jedem Falle jedoch die Verwendung von Elastomerlacken auf Polyurethanbasis. Bei Lacken auf Polyurethanbasis wird zwischen 1-komponentigen und 2-komponentigen Produkten unterschieden, die beide im Prinzip geeignet sind. Bei den 2-komponentigen Polyurethanlacken handelt es sich um einerseits Isocyanate der Funktionalität 2 und größer und andererseits Hydroxyverbindungen der Funktionalität 2 und größer, die gewünschtenfalls im Beisein von Lösungsmitteln und üblichen Hilfsstoffen vor der Anwendung gemischt und so zur Reaktion gebracht werden. Als Isocyanatkomponenten werden hier aromatische die auch aliphatische Diisocyanate, beispieisweise Diphenylmethan-diisocyanat, Toluylendiisoyanat, Isophorondiisocyanat, Dicyclohexylmethandiisocyanat, Tetramethylendiisocyanat oder Hexamethylendiisocyanat eingesetzt. Die mehrfunktionellen Hydroxykomponenten sind Polyether-Polyole auf Basis Ethylenglykol oder Propylenglykol, Triole wie Glycerin, Trimethylolpropan oder Trimethylolethan oder höherfunktionelle Hydroxyverbindungen wie Pentaerythrit.

Zur Herstellung der erfindungsgemäßen lackierten Elastomerteile sind die 1-komponentigen Polyurethanlacke bevorzugt. Bei diesen Produkten handelt es sich um Prepolymere mit endständigen Isocyanatgruppen, die im Beisein üblicher Hilfsstoffe als Lösung in inerten Lösungsmitteln vorliegen und nach Aufbringung durch Reaktion mit Luftfeuchtigkeit zu Polymeren mit Urethan- und Harnstoffstrukturen härten. 1-komponentige Urethanlacke werden hergestellt, in dem man Hydroxyverbindungen, beispielsweise die vorgenannten Hydroxyverbindungen mit mehrfunktionellen Isocyanaten, z. B. einem der vorgenannten Isocyanate, vorzugsweise Diphenylmethandiisocyanat im Überschuß zur Reaktion bringt. Um Lacke mit nicht zu hoher Viskosität zu erhalten, wird dabei beispielsweise ein Verhältnis von 2 Isocyanatgruppen auf eine OH-Gruppe eingestellt. An Hilfsstoffen können die 1-komponentigen Polyurethanlacke Verzögerer, Beschleuniger, Stabilisatoren und Pigmente, vor allen Dingen Rußpigmente enthalten. Auch werden häufig Substanzen eingesetzt, die ein Aufschäumen verhindern. 1-komponentige Polyurethanlacke sind dem Elastomerfachmann seit Jahren bekannt. Es sei hier beispielsweise verwiesen auf G. Klement in Kautschuk und Gummi, Kunststoffe, Jahrgang 23 (1970), Heft 8, Seiten 375 - 378.

Die Erfindung gestattet es, unterschiedliche Elastomere mit günstigen Gleiteigenschaften auszustatten. So liegt ein Vorteil darin, daß nicht nur die üblichen polaren Elastomere, z. B. solche mit Nitrilgruppen, sondern auch die ständig an Bedeutung gewinnenden unpolaren Elastomere, wie Terpolymere auf Basis Ethylenpropylendien (EPDM) oder auch Styrolbutadien-Elastomere mit der die Abstandshalter tragende Lackschicht ausgerüstet werden können. In jedem Fall wurde gute Haftung von Lacken und den darin eingebetteten PVC-Teilchen festgestellt. Darüber hinaus erwiesen sich die lackierten Elastomerteile als unempfindlich gegenüber Feuchtigkeit.

Zur Herstellung der Lackierten Elastomerteile wird von einem für Elastomere üblichen Lack ausgegangen und diesem die gewünschte Menge an PVC zugesetzt. Das Dispergieren der Kugeln erfolgt dabei durch schnell laufende Rührwerke oder ähnliche Mischaggregate. Dabei ist lediglich darauf zu achten, daß die PVC-Kugeln keine störende Beimengungen, wie etwa Wasser enthalten. Auch ist das dem Lack beigesetzte Lösungsmittel so zu wählen, daß es PVC nicht löst und auch nicht als Weichmacher wirkt. Geeignete Lösungsmittel in dieser Hinsicht sind beispielsweise Kohlenwasserstoffe wie Xylol, Toluol. Um ein Absetzen der Kugeln zu verhindern, können Dispergatoren zugegeben werden oder es kann durch Rühren das Absetzen verhindert werden. Im allgemeinen neigen die PVC-Kugeln jedoch nicht zum Absetzen oder Aufschwimmen in Lacken. Die PVCkugelhaltigen Lacken können in üblicher Weise gespritzt werden. Darin liegt eine erhebliche Arbeitsvereinfachung, z. B. gegenüber der Beflockung von Gummiprofilen.

**Beispiel**

Aus den folgenden Komponenten wurde ein 1-Komponenten-Polyurethanlack hergestellt (Angaben in Gew.-Teilen)

      40,1 Gew.-T. Polypropylenglykol, Molekulargewicht 1025, OH-Z 109,6
     238,0 Gew.-T. Polypropylenglykol, Molekulargewicht 2025, OH-Z 55,4
      21,1 Gew.-T. Trimethylolpropan
       5,0 Gew.-T. Ralox® BT (2.6 t-Butyl-4-methylphenol Fa. Raschig)
     195,8 Gew.-T. Diphenylmethandiisocyanat (Desmodur®44) Bayer AG)
     125,0 Gew.-T. Xylol
     125,0 Gew.-T. Toluol
     220,0 Gew.-T. Methylisobutylketon (MIBK)
      30,0 Gew.-T. Ethylenglykolacetat (EGA)
    1000,0 Gew.-T.

In einem Reaktor wurden die Polypropylenglykole, die Lösungsmittel Toluol und Xylol sowie Trimethylolpropan und der Hilfsstoff Ralox® BT eingewogen. Bei vermindertem Druck von 0,666 bar (500 torr) wurde das Gemisch azeotrop entwässert bis der Wassergehalt ca. 100 ppm betrug. Nach dem Abkühlen auf ca. 60°C wurden MIBK, EGA und das Diisocyanat zugesetzt. Es wurde sodann auf 90°C aufgeheizt und 3,5 Stunden bei dieser Temperatur gerührt. Danach wurde bei 50°C über Filter abgelassen.

Es wurden sodann 30 g kugeliges PVC-Pulver (Geon® 221 Fa. BF Goodrich) zugesetzt und mit Hilfe einer Perl-Mill dispergiert. Mit dem so hergestellten Lack wurden Gummiplatten im Spritzauftrag beschichtet (Spritzpistole: Walther Pilot® III Düse 1,0 mm bzw. 1,5 mm, Spritzdruck: 3 bar). Die Trocknung des Lackes erfolgte bei 80°C während 10 min.

Der Lack wurde auf Elastomerprofile auf Basis Ethylenpropylendien (EPDM) bzw. Styrolbutadien (SBR) aufgetragen. Die Elastomerteile waren zuvor aus den nachstehend benannten Kautschukmischungen nach üblichen Vulkanisationstechniken hergestellt worden.

Kautschukmischungen

| Mischungsbestandteile | EPDM | | SBR | |
|---|---|---|---|---|
| Keltan® 812 | 100,0 | Teile | | Teile |
| Buna® Hüls 1500 | | | 100 | " |
| ZnO RS | 5,0 | " | 5 | " |
| Stearinsäure | 2,0 | " | 1 | " |
| FEF | 90,0 | " | | |
| Sillitin® N | 55,0 | " | | |
| Corax® 3 | | | 50 | " |
| Sunpar® 2280 | 70,0 | " | | |
| Caloxol® | 6,0 | " | | |
| Paraflux® | | | 8 | " |
| Vaseline® | 5,0 | " | | |
| Merkapto® 80 % | 1,25 | " | | |
| Santogard® PVI | | | 0,2 | " |
| DPTT 75 %® | 2,0 | " | | |
| P extra N 80 % | 1,9 | " | | |
| Royalac® 133 | 1,0 | " | | |
| Pennzone® B | 0,5 | " | | |
| Vulkacit® CZ | | | 0,95 | " |
| Sulfasan® R | 1,0 | " | | |
| Schwefel | | | 1,6 | " |

In einem weiteren Versuch wurden Kautschukprofile hergestellt, mit dem PVC-Teile enthaltenden Lack beschichtet und im Heißluftkanal unter gleichzeitiger Aushärtung des Lackes vulkanisiert.

In beiden Fällen wurden Gleiteigenschften ermittelt, die denen beflockter Gummiteile entsprachen.

**Patentansprüche**

1. Lackiertes Elastomermaterial mit vermindertem Reibungskoeffizienten, das mit einer Lackschicht überzogen ist, welche fest verankerte, über die Lackoberfläche hinausragende Abstandshalter enthält, dadurch gekennzeichnet, daß es sich bei den Abstandshaltern um kugelige PVC-Teilchen mit einem mittleren Durchmesser zwischen 70 und 200 µm handelt und, daß es sich bei dem Lack um einen Polyurethanlack mit einer Dicke zwischen 7 und 40 µm handelt, wobei die Lackschichtdicke 5 - 50 % des Kugeldurchmessers beträgt.

2. Lackiertes Elastomerteil nach Anspruch 1, dadurch gekennzeichnet, daß es sich bei den Abstandshaltern um kugelige PVC-Teilchen mit einem mittleren Durchmesser zwischen 100 und 150 µm handelt.

3. Lackiertes Elastomerteil nach den Ansprüchen 1 und 2, dadurch gekennzeichnet, daß die PVC-Teilchen eine möglichst enge Teilchengrößenverteilung aufweisen.

4. Lackiertes Elastomerteil nach den Ansprüchen 1 - 3, dadurch gekennzeichnet, daß die Dicke der Lackschicht 10 - 20 % des Kugeldurchmessers beträgt.

5. Lackiertes Elastomerteil nach den Ansprüchen 1 - 4, dadurch gekennzeichnet, daß die Lackschichtdicke 10 und 25 µm beträgt.

6. Lackiertes Elastomerteil nach den Ansprüchen 1 - 5, dadurch gekennzeichnet, daß es aus einem unpolaren Elastomeren, z. B. vulkanisiertem Ethylen-Propylen-Dien-Terpolymeren oder vulkanisiertem Styrol-Butadien-Copolymeren besteht.

7. Verfahren zur Herstellung von lackierten Elastomerteilen nach den Ansprüchen 1 - 6, dadurch gekennzeichnet, daß in einen Elastomerlack kugeliges PVC mit Hilfe eines Dispergiergerätes, z. B. einer Perl-Mill, eingearbeitet wird und nach Verdünnung auf Spritzviskosität der Lack mit üblichen Spritzpistolen aufgetragen und in üblicher Weise getrocknet und gehärtet wird.

**Claims**

1. A lacquered elastomeric material having a reduced coefficient of friction and coated with a lacquer containing firmly anchored spacers projecting beyond the lacquer surface, characterized in that the spacers are spherical PVC particles having a mean diameter of from 70 to 200 µm and that the lacquer is a polyurethane lacquer having a thickness of from 7 to 40 µm, the thickness of the lacquer coating being from 5 to 50 % of the diameter of the spherical particles.

2. A lacquered elastomeric material as claimed in claim 1, characterized in that the spacers are spherical PVC particles having a mean diameter of from 100 to 150 µm.

3. A lacquered elastomeric material as claimed in claims 1 and 2, characterized in that the PVC particles have an extremely narrow particle size distribution.

4. A lacquered elastomeric material as claimed in claims 1 to 3, characterized in that the thickness of the lacquer coating is from 10 to 20 % of the diameter of the spherical particles.

5. A lacquered elastomeric material as claimed in claims 1 to 4, characterized in that the thickness of the lacquer coating is from 10 to 25 µm.

6. A lacquered elastomeric material as claimed in claims 1 to 5, characterized in that it consists of an apolar elastomer, for example vulcanized ethylene-propylene-diene terpolymer or vulcanized styrene-butadiene copolymer.

7. A process for the production of the lacquered elastomeric material claimed in claims 1 to 6, characterized in that spherical PVC is incorporated in an elastomeric lacquer by means of a dispersion unit, for example a pearl mill, and after dilution to spraying viscosity the lacquer is applied by standard spray guns and dried and hardened in the usual way.

**Revendications**

1. Elastomère verni à coefficient de frottement réduit qui est revêtu d'une couche de vernis, laquelle contient des écarteurs solidement fixés, se dressant au-dessus de la surface du vernis , caractérisé en ce que, quant aux écarteurs, il s'agit de particules sphériques de PVC ayant un diamètre moyen compris entre 0 et 200 µm, en ce que, quant au vernis, il s'agit d'un vernis polyuréthanne ayant une épaisseur comprise entre 7 et 40 µm, l'épaisseur de la couche de vernis représentant de 5 à 50 % du diamètre des billes.

2. Article élastomère verni selon la revendication 1, caractérisé en ce que, quant aux écarteurs, il s'agit de particules sphériques de PVC ayant un diamètre moyen compris entre 100 et 150 µm.

3. Article élastomère verni selon les revendications 1 et 2, caractérisé en ce que les particules de PVC présentent une distribution granulométrique la plus étroite possible.

4. Article élastomère verni selon l'une quelconque des revendications 1 à 3, caractérisé en ce que l'épaisseur de la couche de vernis représente de 10 à 20 % du diamètre des billes.

5. Article élastomère verni selon l'une quelconque des revendications 1 à 4, caractérisé en ce que l'épaisseur de la couche de vernis va de 10 à 25 μm.

6. Article élastomère verni selon l'une quelconque des revendications 1 à 5, caractérisé en ce qu'il est constitué d'un élastomère non polaire, par exemple d'un terpolymère éthylène/propylène/diène ou d'un copolymère styrène/butadiène vulcanisé.

7. Procédé pour la production d'articles élastomères vernis selon l'une quelconque des revendications 1 à 6, caractérisé en ce que l'on incorpore du PVC en billes dans un vernis pour élastomères, à l'aide d'un appareil de dispersion, par exemple un mélangeur à billes et après dilution à la viscosité convenable pour le pistolage, on applique le vernis au pistolet usuel et on le sèche et fait durcir à la manière habituelle.